# EUROPEAN PATENT APPLICATION

(11) **EP 1 001 424 A2**
(43) Date of publication of application: **17.05.2000**
(21) Application number: 99122685.3
(22) Date of filing: 15.11.1999
(51) Int. Cl.: G11B 27/032, G11B 27/034

(54) **Digital information editing system**

(30) Priority: 16.11.1998 JP 32429398
(71) Applicant: MATSUSHITA ELECTRIC INDUSTRIAL CO., LTD., Kadoma-shi, Osaka 571-8501 (JP)
(72) Inventor: Mino, Mineo, 1006, Oaza Kadoma, Kadoma-shi, Osaka-fu (JP); Mizukawa, Yousuke, 1006, Oaza Kadoma, Kadoma-shi, Osaka-fu (JP); Yoshiura, Tsukasa, 1006, Oaza Kadoma, Kadoma-shi, Osaka-fu (JP)
(74) Representative: Grünecker, Kinkeldey, Stockmair & Schwanhäusser Anwaltssozietät

(57) **Abstract**

According to a digital information editing system, a personal computer (P11) controls a hard disc device (H11) and a digital VCR (500) to transmit all or part of an AV/subcode digital stream signal obtained in the digital VCR (500) and the personal computer (P11), between a first hard disc (100) of the personal computer (P11) and a second hard disc (101) of the hard disc device (H11) through a first IEEE 1394 bus (B11). The AV/subcode digital stream signal is edited by using the second hard disc (101) capable of interfacing with the first IEEE 1394 bus (B11), according to editing programs determined while monitoring images from the digital VCR (500) reproduced by a monitor TV (504). In this case, a recording area for audio and video digital stream signals is set on the second hard disc (101) in such a way that the recording positions of the digital stream signals are continuous, and only the digital stream signals are recorded in this area so as to maintain the continuity of data in recording and reproducing the digital stream signals, thereby allowing the stream signals to be edited without changing any of their digital signal status.

## Description

### Field of the Invention

The present invention relates to a digital information editing system for digitally editing audio and video information from a digital VCR using a memory disc such as a hard disc that is a recording medium.

### Background of the Invention

To edit sounds and videos recorded on a recording medium using a digital VCR for digitally recording and reproducing sounds and videos on and from the recording medium, for example, an installed digital VCR or a camera-integrated digital VCR generally called a "digital cam coder," a digital information editing system is conventionally used that can use the digital VCR to reproduce sounds and videos and that can digitally edit the sounds and videos using a memory disc such as a hard disc that is another recording medium.

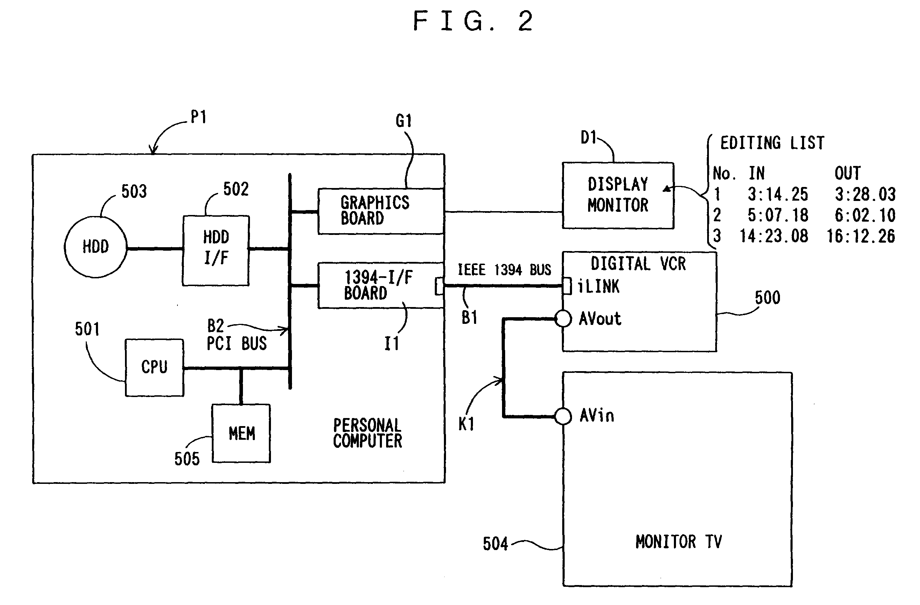

Such a conventional digital information editing system often carries out non-linear editing; as shown in FIG. 2, a 1394-I/F board I1 installed in a personal computer P1 and comprising a link and a phy (not shown) receives an audio and video digital stream signal from a digital VCR (DVC) 500 through a single bus line (an audio and video digital stream bus standardized by IEEE 1394 and hereafter simply referred to as a "IEEE 1394 bus B1), and the digital stream signal is subsequently recorded on an HDD 503 via an internal bus B2 such as a PCI bus through a high-speed SCSI constituting an interface (HDDI/F) for a hard disc (HDD) 503 and is then edited under the control of a CPU 501.

That is, the DVC 500 and the personal computer P1 are connected through a single IEEE 1394 bus B1. The DVC 500 and the personal computer P1 each have a digital interface for using a specified method to input from and output to the IEEE 1394 bus B1, all digital data including an AV digital stream signal comprising an audio and video digital stream signals DVC-compressed by the DVC 500 and a control signal comprising a command for controlling the DVC 500 and a status signal for the DVC 500, and also have an interface circuit for the digital interface.

When a user operates the personal computer for editing, the CPU 501 controls the DVC 500 to transmit an AV digital stream signal to the personal computer P1 through the IEEE 1394 bus B1, and the AV digital stream signal is recorded on the HDD 503 via the 1394-I/F board I1 in the personal computer P1 comprising the digital interface and its interface circuit and through the PCI bus B2 that is an internal bus in the personal computer P1 as well as an HDD I/F 502.

As described above, an AV digital stream signal comprises an audio digital stream signal and a video digital stream signal and assumes the form of a continuous signal on the IEEE 1394 bus B1. The above editing system using the personal computer P1, however, uses non-linear editing as an editing method to record various data on the HDD 503 at different positions depending on the current condition.

Thus, the AV digital stream signal, which is continuous on the IEEE 1394 bus B1, cannot be continuously recorded on the HDD 503 easily, so it is recorded discontinuously.

When the user continuously operates the personal computer, the CPU 501 further provides control to reproduce an AV digital stream signal from the HDD 503, and the AV digital stream signal is sent through the HDD I/F 502 and the PCI bus B2, via the 1394-I/F board I1 and the digital interface, and through the IEEE 1394 bus B1 to the DVC 500, where a codec (not shown) provided therein decodes this signal into an analog video signal. The converted video signal is applied to a monitor TV 504 through a connection cable K1.

The user then determines programs for an editing cut-in point (a start point) and an editing cut-out point (an end point) by operating the personal computer while monitoring a reproduced image on the monitor TV 504. Then, under the control of the CPU 501, these programs are displayed on a personal computer display monitor D1 via a graphics board G1 as an editing list. The AV digital stream signal from the HDD 503 is edited and reproduced according to the programs. The AV digital stream signal is temporarily saved to a memory (MEM) 505 via the HDD I/F 502 and the PCI bus B2, while being again sent through the PCI bus B2, via the 1394-I/F board I1 and the digital interface, and through the IEEE 1394 bus B1 to the DVC 500, where the edited sounds and videos are recorded.

In this manner, the DVC 500 edits sounds and videos recorded on its recording medium.

Digital information editing systems known of this kind, however, have the following disadvantages:

In the conventional example shown in FIG. 2, sounds and videos from the DVC 500 are edited by the personal computer P1 using its HDD 503. In this case, even if the personal computer P1 simply loads only AV digital stream signals in the HDD 503, the internal bus is required to transfer data at a higher speed, the HDD 503 is required to operate at a higher speed and to have a higher capacity and HDD I/F 502 is required to operate at higher speed. Accordingly, software for operating these components becomes complicated and the CPU 501 itself must be able to operate at a high speed, thereby significantly increasing editing system costs.

In addition, not only AV digital stream signals but also various other data are recorded on the HDD 503 of the personal computer P1 at different positions, so the AV digital stream signal, which is continuous on the IEEE 1394 bus B1, cannot be continuously recorded on the HDD 503 easily, and it is thus difficult to prevent the AV digital stream signal recorded in such a manner from being discontinuously reproduced. In addition, during recording, retry operations are performed to prevent mistakes in recording, so sounds and videos from the DVC 500 are temporally inefficiently edited.

### Disclosure of the Invention

The present invention has been provided in view of these disadvantages, and its object is to provide a digital information editing system capable of editing sounds and videos from a digital VCR more inexpensively and efficiently than in the prior art and increasing the editing speed.

To attain this object, a digital information editing system set forth in claim 1 of the present invention is characterized by comprising a digital VCR for digitally recording and reproducing sounds and videos on and from a recording medium, a personal computer having a first memory disc that is a recording medium different from the above recording medium, and a memory disc device having a second memory disc different from the recording medium and first memory disc, the personal computer and the memory disc device being connected together by a first stream bus, the personal computer and the digital VCR being connected together by a second stream bus, the first and second stream buses being standardized as buses for audio and video digital stream signals, the first and second memory disc being used to digitally edit, under the control of the personal computer through the first stream bus, audio and video information input to the memory disc device from the digital VCR through the second stream bus, via the personal computer, and through the first stream bus, wherein the digital VCR comprises a bus interface that can use a specified method to input from and output to the second stream bus, as the audio and video digital stream signal, all data corresponding to an AV/subcode digital stream signal comprising a DVC-compressed audio and video digital stream signals output from the digital VCR and a subcode digital stream signal including a time code and to a control signal comprising a command for controlling the digital VCR and a status signal for the digital VCR, the digital VCR also comprising a bus interface circuit for allowing the bus interface to input and output the data, wherein the personal computer comprises a first bus interface means having an internal bus such as a PCI bus configured by means of a bus wiring, the first bus interface means being configured by being connected between the internal bus and a plurality of the stream buses so as to interface these buses, the first bus interface means being capable of using the specified method to input from and output to each stream bus, all data corresponding to the AV/subcode digital stream signal and the control signal; a memory disc interface connected to the internal bus to interface with the first memory disc; and a main control unit connected to the internal bus to control all components in the personal computer, and wherein the memory disc device comprises a second bus interface means directly connected to the first stream bus and capable of using the specified method to input from and output to the first stream bus, all data corresponding to the AV/subcode digital stream signal and the control signal; disc interface means capable of recording on and reproducing from the second memory disc in the units of video signal frames, all data corresponding to the AV/subcode digital stream signal and the control signal from the second bus interface means; and interface control means for operating and controlling the second bus interface means and the disc interface means according to the control signal, whereby under the control of the main control unit, all or part of the AV/subcode digital stream signal from the digital VCR is recorded on the second memory disc through the second stream bus, through first bus interface means and the first stream bus, and via the second bus interface means and the disc interface means under the control of the interface control means; a portion of the AV/subcode digital stream signal that is required by the main control unit to process images is reproduced from the second memory disc via the disc interface means and recorded on the first memory disc through the disc interface means, the second bus interface means, and the first stream bus, and via the first bus interface means, the internal bus, and the memory disc interface under the control of the main control unit; video information which is image-processed using the first memory disc and video information comprising characters and images generated in the personal computer are recorded again on the second memory disc through the memory disc interface, the internal bus, the first bus interface means, and the first stream bus, and via the second bus interface means and the disc interface means under the control of the interface control means; the personal computer sends all the AV/subcode digital stream signal including the video information recorded on the second memory disc to the digital VCR from the memory disc device through the first stream bus, the first bus interface means, and the second stream bus; a VCR codec provided in the digital VCR and having a decoder decodes the AV/subcode digital stream signal into an analog video signal, which is then applied to a monitor TV, and while monitoring images reproduced by the monitor TV, a cut-in point that is an editing start point and a cut-out point that is an editing end point are determined to carry out editing according to the programs using the second memory disc; and the edited AV/subcode digital stream signal is subsequently reproduced from the second memory disc and recorded on the digital VCR through the first stream bus, the first bus interface means, and the second stream bus.

In addition, a digital information editing system set forth in claim 2 is characterized in that the personal computer according to claim 1 has a graphics board connected to the internal bus to display graphics and in that a display monitor is connected to the graphics board so that while the programs for the cut-in and cut-out points that are the editing start and end points, respectively, are being displayed on the display monitor, the editing cut-in and cut-out points are checked and changed.

In addition, a digital information editing system set forth in claim 3 is characterized in that editing is carried out while displaying on the display monitor an small editing screen corresponding to the programs for the editing cut-in and cut-out points based on the time code in the AV/subcode digital stream signal according to claim 2.

In addition, a digital information editing system set forth in claim 4 is characterized in that editing is carried out while displaying on the display monitor an editing list corresponding to the programs for the editing cut-in and cut-out points based on the time code in the AV/subcode digital stream signal according to claim 2.

According to this apparatus, in editing audio and video digital information from the digital VCR, the following operations are performed: controlling the interface control means in the memory disc device using the main control unit in the personal computer, and using the first memory disc connected to the first bus interface means in the personal computer via the internal bus and the memory disc interface and the second memory disc connected to the second bus interface means in the memory disc device via the disc interface means, an AV/subcode digital stream signal is obtained from the digital VCR through the second stream bus. All or part of the AV/subcode digital stream signal and all or part of the AV/subcode digital stream signal based on video information comprising characters and other images generated in the personal computer are recorded through the first bus interface means and the first stream bus, on the second memory disc directly interfacing with the first stream bus via the second bus interface means and the disc interface means. All the AV/subcode digital stream signal is sent to the digital VCR from the memory disc device through the first stream bus, the first bus interface means, and the second stream bus. The VCR codec of the digital VCR decodes the AV/subcode digital stream signal into an analog video signal, which is then applied to the monitor TV. While monitoring images reproduced by the monitor TV, programs for the cut-in point that is the editing start point and the cut-out point that is the editing end point are determined to carry out editing according to the programs using the second memory disc. Subsequently, the edited AV/subcode digital stream signal is reproduced from the second memory disc and recorded on the digital VCR through the first stream bus, the first bus interface means, and the second stream bus. In this case, a recording area for audio and video digital stream signals is set on the second memory disc in such a way that the recording positions of the digital stream signals are continuous, and only the digital stream signals are recorded in this area so as to maintain the continuity of data in recording and reproducing the digital stream signals, thereby enabling the stream signals to be edited without changing their digital signal status.

In addition, a digital information editing system set forth in claim 5 is characterized in that the first and second stream buses according to any of claims 1 to 4 comprise IEEE 1394 buses specified by the IEEE.

According to this apparatus, in editing audio and video digital information from the digital VCR, the following operations are performed: controlling the interface control means in the memory disc device using the main control unit in the personal computer, and using the first memory disc connected to the first bus interface means in the personal computer via the internal bus and the memory disc interface and the second memory disc connected to the second bus interface means in the memory disc device via the disc interface means, an AV/subcode digital stream signal is obtained from the digital VCR through the second stream bus standardized according to the IEEE 1394. All or part of the AV/subcode digital stream signal and all or part of the AV/subcode digital stream signal based on video information comprising characters and other images generated in the personal computer are recorded through the first bus interface means and the first stream bus standardized according to the IEEE 1394, on the second memory disc directly interfacing with the first stream bus via the second bus interface means and the disc interface means. All the AV/subcode digital stream signal is sent to the digital VCR from the memory disc device through the first stream bus, the first bus interface means, and the second stream bus. The VCR codec of the digital VCR decodes the AV/subcode digital stream signal into an analog video signal, which is then applied to the monitor TV. While monitoring images reproduced by the monitor TV, programs for the cut-in point that is the editing start point and the cut-out point that is the editing end point are determined to carry out editing according to the programs using the second memory disc. Subsequently, the edited AV/subcode digital stream signal is reproduced from the second memory disc and recorded on the digital VCR through the first stream bus, the first bus interface means, and the second stream bus. In this case, a recording area for audio and video digital stream signals is set on the second memory disc in such a way that the recording positions of the digital stream signals are continuous, and only the digital stream signals are recorded in this area so as to maintain the continuity of data in recording and reproducing the digital stream signals, thereby enabling the stream signals to be edited without changing their digital signal status.

According to the preferred embodiment of the present invention, in editing audio and video digital information from the digital VCR, the following operations are performed: controlling the interface control means in the memory disc device using the main control unit in the personal computer, and using the first memory disc connected to the first bus interface means in the personal computer via the internal bus and the memory disc interface and the second memory disc connected to the second bus interface means in the memory disc device via the disc interface means, an AV/subcode digital stream signal is obtained from the digital VCR through the second stream bus. All or part of the AV/subcode digital stream signal and all or part of the AV/subcode digital stream signal based on video information comprising characters and other images generated in the personal computer are recorded through the first bus interface means and the first stream bus, on the second memory disc directly interfacing with the first stream bus via the second bus interface means and the disc interface means. All the AV/subcode digital stream signal is sent to the digital VCR from the memory disc device through the first stream bus, the first bus interface means, and the second stream bus. The VCR codec of the digital VCR decodes the AV/subcode digital stream signal into an analog video signal, which is then applied to the monitor TV. While monitoring images reproduced by the monitor TV, programs for the cut-in point that is the editing start point and the cut-out point that is the editing end point are determined to carry out editing according to the programs using the second memory disc. Subsequently, the edited AV/subcode digital stream signal is reproduced from the second memory disc and recorded on the digital VCR through the first stream bus, the first bus interface means, and the second stream bus. In this case, a recording area for audio and video digital stream signals is set on the second memory disc in such a way that the recording positions of the digital stream signals are continuous, and only the digital stream signals are recorded in this area so as to maintain the continuity of data in recording and reproducing the digital stream signals, thereby enabling the stream signals to be edited without changing their digital signal status.

Thus, sounds and videos from the digital VCR can be edited more inexpensively and more efficiently than in the prior art, and the editing becomes faster, more accurate, and multifunctional.

### Brief Description of the Drawings

FIG. 1 is a block diagram of a digital information editing system showing an embodiment of the present invention; and
FIG. 2 is a block diagram of a digital information editing system showing a conventional example.

### Description of the Embodiments

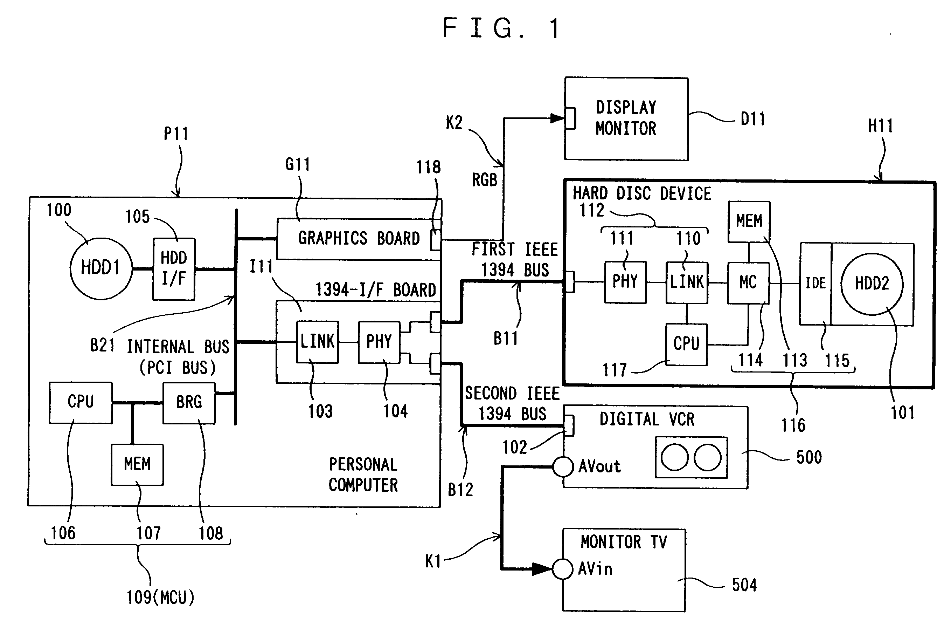

FIG. 1 shows a preferred embodiment of the present invention.

A digital information editing system according to the embodiment of the present invention will be described. Those components which operate in the same manner as in the conventional digital information editing system shown in FIG. 2 have the same reference numerals, and their detailed description is omitted.

FIG. 1 is a block diagram of the digital information editing system showing the embodiment of the present invention. As a basic configuration, this digital information editing system comprises a digital VCR (DVCR) 500 digitally recording and reproducing sounds and videos on and from a magnetic-tape-like digital video cassette (DVC); a personal computer P11 having a first hard disc (HDD1) 100 as a first memory disc that is in a media form different from the recording medium of the digital VCR 500 and that is one of the disc-shaped memories; and a hard disc device H11 as a memory disc device having a second hard disc (HDD2) 101 as a second memory disc that assumes a medium form similar to that of the first hard disc (HDD1) 100 of the personal computer P11 but that is different from the first hard disc (HDD1) 100, wherein the personal computer P11 and the hard disc device H11 are connected by a first IEEE 1394 bus B11 as a first stream bus, while the personal computer P11 and the digital VCR 500 are connected by a second IEEE 1394 bus B12 as a second stream bus, the IEEE 1394 buses being stream buses standardized by the IEEE to transmit audio and video digital stream signals. The stream buses are represented as the first IEEE 1394 bus B11 and the second IEEE 1394 bus B12 because despite conformance to the identical standard, the two IEEE 1394 buses B11, B12 are connected to the personal computer P11.

Audio and video information input to the hard disc device H11 from the digital VCR 500 through the second IEEE 1394 bus B12, via the personal computer P11, and through the first IEEE 1394 bus B11 is digitally edited using the first hard disc 100 and the second hard disc 101, under the control of the personal computer P11 through the first IEEE 1394 bus B11.

In FIG. 1, the digital VCR 500 comprises a bus interface (a DV terminal) 102 that can use a specified method to input from and output to the IEEE 1394 bus B12, as audio and video digital stream signal, all data corresponding to an AV/subcode digital stream signal comprising a DVC-compressed audio and video digital stream signals output from the digital VCR 500 and a subcode digital stream signal including a time code and to a control signal comprising a command for controlling the digital VCR 500 and a status signal for the digital VCR 500, the digital VCR also comprises a bus interface circuit (not shown) for allowing the bus interface 102 to input and output data.

In addition, the personal computer P11 comprises a first bus interface means (1394-I/F board) I11 having an internal bus B21 such as a PCI bus configured by means of a bus wiring, which has also been described in the prior art, the first bus interface means being configured to be connected between the internal bus B21 and the plurality of (in this case, two) IEEE 1394 buses so as to interface these buses, the first bus interface means capable of using the specified method to input from and output to each stream bus, all data corresponding to the AV/subcode digital stream signal and the control signal, the first bus interface means comprising a link 103 that is a data link layer for a higher protocol for audio and video digital stream signals and a phy 104 that is a physical layer for a lower protocol; a memory disc interface (HDD I/F) 105 connected to the internal bus B21 to interface with the first hard disc 100; and a main control unit 109 connected to the internal bus B21 to control all components in the personal computer P11 and comprising a CPU 106, an information memory (MEM) 107, and a BRG means 108.

In addition, the hard disc device H11 comprises a second bus interface means 112 directly connected to the first IEEE 1394 bus B11, the second bus interface means capable of using the specified method to input from and output to the first IEEE 1394 bus B11, all data corresponding to the AV/subcode digital stream signal and the control signal, the second bus interface means comprising a link 110 and a phy 111 similar to those of the first bus interface means 111 in the personal computer P11; disc interface means 116 comprising a memory controller (MC) 114 for using a data buffer (MEM) 113 to record on and reproduce from the second hard disc 101, in the units of video signal frames, all data corresponding to the AV/subcode digital stream signal and control signal from the second bus interface means 112 by mediating between the second hard disc 101 and a disc interface means, which is described below, and of an interface (IDE) 115 for transmitting signals between the memory controller 114 and the second hard disc 101 for recording on and reproduction from the second hard disc 101; and interface control means (CPU) 117 for operating and controlling the second bus interface means 112 and the disc interface means 116 according to the control signal.

An operation of the digital information editing system configured as described above will be described below.

First, under the control of the main control unit 109 in the personal computer P11, the personal computer P11 and the digital VCR 500 are controlled and operated to record all or part of the AV/subcode digital stream signal from the digital VCR 500 on the second hard disc 101 through the second IEEE 1394 bus B12, through first bus interface means I11 and the first IEEE 1394 bus B11, and via the second bus interface means 112 and the disc interface means 116 under the control of the interface control means 117 of the hard disc device H11.

A portion of the AV/subcode digital stream signal that is required by the main control unit 109 in the personal computer P11 to process images is reproduced from the second hard disc 101 in the hard disc device H11 via the disc interface means 116 and recorded on the first hard disc 100 through the disc interface means 116, the second bus interface means 112, and the first IEEE 1394 bus B11 and via the first bus interface means 111, the internal bus B21, and the memory disc interface 105 under the control of the main control unit 109 in the personal computer P11.

Video information image-processed by the main control unit 109 using the first hard disc 100 and video information comprising characters and other images generated in the personal computer P11 are recorded again on the second hard disc 101 through the memory disc interface 105, the internal bus B21, the first bus interface means I11, and the first IEEE 1394 bus B11, and via the second bus interface means 112 and the disc interface means 116 under the control of the interface control means 117 in the hard disc device H11.

Next, the personal computer P11 sends all the AV/subcode digital stream signal including the video information recorded on the second hard disc 101 in the hard disc device H11 to the digital VCR 500 from the hard disc device H11 through the first IEEE 1394 bus B11, the first bus interface means I11, and the second IEEE 1394 bus B12.

A VCR codec provided in the digital VCR 500 and having a decoder (the codec and the decoder are not shown) decodes the AV/subcode digital stream signal into an analog video signal, which is then applied to a monitor TV 504 through the connection cable K1. Then, while monitoring images reproduced by the monitor TV, programs for a cut-in point that is an editing start point and a cut-out point that is an editing end point are determined to carry out editing according to the programs using the second hard disc 101 in the hard disc device H11.

Subsequently, the edited AV/subcode digital stream signal is reproduced from the second hard disc 101 and recorded on the digital VCR 500 through the first IEEE 1394 bus B11, the first bus interface means I11, and the second IEEE 1394 bus B12. By providing the personal computer P11 with a graphics

board G11 connected to the internal bus B21 to display graphics and connecting a display monitor D11 to an I/O terminal 118 of the graphics board G11 as a display device using, for example, an RGB connection cable K2, the editing cut-in and cut-out points are checked and changed while the programs for the cut-in and cut-out points that are the editing start and end points, respectively, are being displayed on the display monitor.

In addition, editing is carried out in the personal computer P11 while displaying on the display monitor D11 connected to the graphics board G11, an small editing screen corresponding to the programs for the editing cut-in and cut-out points based on the time code in the AV/subcode digital stream signal, under the control of the main control unit 109. The editing cut-in and cut-out points for the programs can be checked and changed while monitoring the small editing screen displayed on the display monitor D11, and editing can be carried out while monitoring images reproduced on the monitor TV 504 and the small editing screen displayed on the display monitor D11.

In addition, editing can be carried out while displaying on the display monitor D11 an editing list corresponding to the editing programs and monitoring images reproduced on the monitor TV 504 and the editing list displayed on the display monitor D11.

As described above, according to the configuration of each embodiment, in editing audio and video digital information from the digital VCR 500, the following operations will be performed: By controlling the interface control means 117 in the hard disc device H11 using the main control unit 109 in the personal computer P11, and using the first hard disc 100 connected to the first bus interface means I11 in the personal computer P11 via the internal bus B21 and the memory disc interface 105 and the second hard disc 101 connected to the second bus interface means 112 in the hard disc device H11 via the disc interface means 116, an AV/subcode digital stream signal is obtained from the digital VCR 500 through the second IEEE 1394 bus B21. All or part of the AV/subcode digital stream signal and all or part of the AV/subcode digital stream signal based on video information comprising characters and other images generated in the personal computer P11 are recorded through the first bus interface means I11 and the first IEEE 1394 bus B11, on the second hard disc 101 directly interfacing with the first IEEE 1394 bus B11 via the second bus interface means 112 and the disc interface means 116. All the AV/subcode digital stream signal is sent to the digital VCR 500 from the hard disc device H11 through the first IEEE 1394 bus B11, the first bus interface means I11, and the second IEEE 1394 bus B12. The VCR codec of the digital VCR 500 decodes the AV/subcode digital stream signal into an analog video signal, which is then applied to the monitor TV 504. While monitoring images reproduced by the monitor TV 504, programs for the cut-in point that is the editing start point and the cut-out point that is the editing end point are determined to carry out editing on the second hard disc 101 according to the programs. Subsequently, the edited AV/subcode digital stream signal is reproduced from the second hard disc 101 and recorded on the digital VCR 500 through the first IEEE 1394 bus B11, the first bus interface means I11, and the second IEEE 1394 bus B12. In this case, a recording area for audio and video digital stream signals is set on the second hard disc 101 in such a way that the recording positions of the digital stream signals are continuous, and only the digital stream signals are recorded in this area so as to maintain the continuity of data in recording and reproducing the digital stream signals, thereby enabling the stream signals to be edited without changing their digital signal status.

As a result, sounds and videos from the digital VCR 500 can be edited more inexpensively and more efficiently than in the prior art, and the editing becomes faster, more accurate, and multifunctional.

Each of the above embodiments has been described in conjunction with the case where the memory discs in the personal computer P11 and the hard disc device H11 are both configured by the hard discs (HDD) 100, 101. The memory discs can be configured by using CD-RAMs or DVD-RAMs that can be rewritten a number of times, and this configuration provides similar effects.

In addition, although each of the above embodiments has been described in conjunction with the stream buses configured by the IEEE 1394 buses B11, B12, buses according to another standard can be used as long as they are similarly standardized for audio and video digital stream signals, and this configuration provides similar effects.

## Claims

1. A digital information editing system comprising:
a digital VCR for digitally recording and reproducing sounds and videos on and from a recording medium;
a personal computer having a first memory disc that is a recording medium different from said recording medium; and
a memory disc device having a second memory disc different from said recording medium and first memory disc,
said personal computer and said memory disc device being connected together by a first stream bus, said personal computer and said digital VCR being connected together by a second stream bus, the first and second stream buses being standardized as buses for audio and video digital stream signals, said first and second memory disc being used to digitally edit, under the control of said personal computer through said first stream bus, audio and video information input to the memory disc device from the digital VCR through said second stream bus, via the personal computer, and through said first stream bus,
wherein
said digital VCR comprises a bus interface that can use a specified method to input from and output to said second stream bus, as said audio and video digital stream signal, all data corresponding to an AV/subcode digital stream signal comprising a DVC-compressed audio and video digital stream signals output from said digital VCR and a subcode digital stream signal including a time code and to a control signal comprising a command for controlling said digital VCR and a status signal for said digital VCR, the digital VCR also comprising a bus interface circuit for allowing the bus interface to input and output said data,
said personal computer comprises a first bus interface means having an internal bus such as a PCI bus configured by means of a bus wiring, the first bus interface means being configured by being connected between said internal bus and a plurality of said stream buses so as to interface these buses, the first bus interface means being capable of using the specified method to input from and output to each stream bus, all data corresponding to said AV/subcode digital stream signal and said control signal; a memory disc interface connected to said internal bus to interface with said first memory disc; and a main control unit connected to said internal bus to control all components in the personal computer, and
said memory disc device comprises a second bus interface means directly connected to said first stream bus and capable of using said specified method to input from and output to said first stream bus, all data corresponding to said AV/subcode digital stream signal and said control signal; disc interface means capable of recording on and reproducing from said second memory disc in the units of video signal frames, all data corresponding to the AV/subcode digital stream signal and the control signal from said second bus interface means; and interface control means for operating and controlling said second bus interface means and said disc interface means according to said control signal,
whereby
under the control of said main control unit, all or part of the AV/subcode digital stream signal from said digital VCR is recorded on said second memory disc through said second stream bus, through said first bus interface means, and said first stream bus, and via said second bus interface means and said disc interface means under the control of said interface control means,
a portion of the AV/subcode digital stream signal that is required by said main control unit to process images is reproduced from said second memory disc via said disc interface means and recorded on said first memory disc through said disc interface means, said second bus interface means, and said first stream bus, and via said first bus interface means, said internal bus, and said memory disc interface under the control of said main control unit,
video information which is image-processed using the first memory disc and video information comprising characters and images generated in the personal computer are recorded again on said second memory disc through said memory disc interface, said internal bus, said first bus interface means, and said first stream bus, and via said second bus interface means and said disc interface means under the control of said interface control means,
said personal computer sends all the AV/subcode digital stream signal including said video information recorded on said second memory disc to said digital VCR from said memory disc device through said first stream bus, said first bus interface means, and said second stream bus,
a VCR codec provided in said digital VCR and having a decoder decodes said AV/subcode digital stream signal into an analog video signal, which is then applied to a monitor TV, and while monitoring images reproduced by said monitor TV, programs for a cut-in point that is an editing start point and a cut-out point that is an editing end point are determined to carry out editing according to the programs using said second memory disc, and
the edited AV/subcode digital stream signal is subsequently reproduced from said second memory disc and recorded on said digital VCR through said first stream bus, said first bus interface means, and said second stream bus.

2. The digital information editing system according to claim 1, wherein the personal computer has a graphics board connected to the internal bus to display graphics, and a display monitor is connected to the graphics board so that while the programs for the cut-in and cut-out points that are the editing start and end points, respectively, are being displayed on said display monitor, the editing cut-in and cut-out points are checked and changed.

3. The digital information editing system according to claim 2, wherein editing is carried out while displaying on the display monitor an small editing screen corresponding to the programs for the editing cut-in and cut-out points based on the time code in the AV/subcode digital stream signal.

4. The digital information editing system according to claim 2, wherein editing is carried out while displaying on the display monitor an editing list corresponding to the programs for the editing cut-in and cut-out points based on the time code in the AV/subcode digital stream signal.

5. The digital information editing system according to any one of claim 1 to 4 wherein the first and second stream buses comprise IEEE 1394 buses specified by the IEEE.
